# EUROPEAN PATENT SPECIFICATION

(11) **EP 0 707 795 B1**
(45) Date of publication and mention of the grant of the patent: **03.01.2001**
(21) Application number: 95307296.4
(22) Date of filing: 13.10.1995
(51) Int. Cl.: A21C 3/04, A21C 11/20

(54) **Apparatus for extruding food material**
Vorrichtung zum Auspressen von Nahrungsmittel
Appareil pour l'extrusion d'un aliment

(30) Priority: 13.10.1994 JP 27581794
(43) Date of publication of application: 24.04.1996
(73) Proprietor: RHEON AUTOMATIC MACHINERY CO., LTD., Utsunomiya-shi Tochigi-ken (JP)
(72) Inventor: Morikawa, Michio, Tochigi-ken (JP)
(74) Representative: Leale, Robin George

(56) References cited:
- EP-A- 0 580 430
- FR-A- 1 551 231
- GB-A- 637 089
- US-A- 3 106 151

## Description

The present invention relates to an apparatus for intermittently extruding a predetermined quantity of food material to supply a predetermined amount of highly viscoelastic fluid material that is used in producing foods, etc.

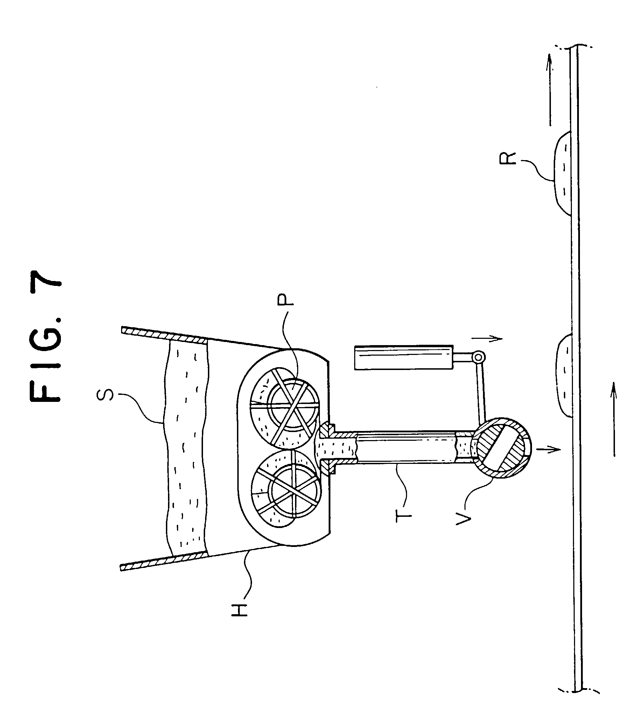

A prior art technique relevant to the present invention is shown in Fig. 7. An apparatus for intermittently supplying food material S comprises a supply pump P and an extrusion valve V, the supply pump P being adapted to supply the food material S contained in a hopper H.

When the food material S is supplied by this apparatus, the material is supplied to a supply pipe T while the extrusion valve V is closed and the supply pump P is then stopped. When the extrusion valve V opens, the supply pump P simultaneously begins to rotate to supply under a predetermined pressure the food material S into the supply pipe T. Thus a predetermined amount of the food material S is intermittently discharged through the exit of the extrusion valve V. After a predetermined time the supply pump P stops rotating, and simultaneously the extrusion valve V closes, whereby a predetermined quantity of the material is discharged.

In this case, however, if the intervals of opening and closing of the extrusion valve V are not equal, the food material S supplied to the supply pipe T will be pulled back to the hopper 11 through the supply pump P, by its own elasticity. This brings about a density change in the food material S, and also makes the pressure of the food material S in the supply pipe T unstable. Therefore, this poses a problem in that subsequent food material S cannot be extruded in predetermined amounts.

In such prior art techniques for intermittently supplying a predetermined quantity of highly viscoelastic food material, for instance topping material consisting of a highly viscoelastic biscuit used for producing cake bread like melon bread, topping material mixed with chocolate chips or raisins, chocolates, jam or custard, or highly viscoelastic food material such as kneaded sea urchins and cheese, the food material was extruded from the exit at unequal intervals and tended to be pulled back when the pump was stopped. The pressure in the food material decreased as it was extruded from the extrusion valve and so did the pressure at the downstream end of the supply pump.

US-A-3106151 discloses an apparatus for intermittently extruding a predetermined quantity of a viscous food material comprising: a hopper for receiving the viscous food material, the hopper having a supply pump therein at a lower discharging portion thereof; a valve having a housing that has a discharging aperture at a lower part thereof and a rotor, which is disposed in the housing, for opening and closing the discharging aperture to allow the viscous food material to be intermittently discharged through the discharging aperture; and a supply member that connects the lower discharging portion of the hopper with the housing and feeds the viscous food material from the hopper to the housing.

The present invention is characterised over US-A-3106151 in that a pressure sensor is disposed to detect a pressure of the viscous food material at a place near the rotor and along a passage for the food material that is defined between the hopper and the rotor by the supply member and the housing.

Preferably the pressure sensor is a semiconductor-type pressure sensor.

Preferably the apparatus further includes a position sensing means located above a conveying means for detecting the positions of articles to be covered with the said food material which are transferred by the conveyor means.

From a further aspect, the present invention provides a method for intermittently extruding a predetermined quantity of a viscous food material from a discharging aperture of an intermittently-feeding valve that has a rotor for opening and closing the discharging aperture, comprising the steps of: providing a viscous food material to a hopper that has a supply pump therein at a lower discharging portion thereof; connecting the lower discharging portion of the hopper with the intermittently-feeding valve, which is disposed under the hopper, by a supply member, thereby defining a passage for the viscous food material between the hopper and the intermittently-feeding valve; operating the supply pump, thereby supplying the food material from the hopper to the intermittently-feeding valve through the passage; and operating the intermittently-feeding valve such that the discharging aperture of the valve is opened and closed by the rotor, thereby allowing the food material to be intermittently extruded from the valve, characterised in that the method further includes the step of detecting a pressure of the food material located near the rotor to control the operating rate of the supply pump based on the detected pressure to intermittently extrude the viscous food material under a predetermined pressure.

Two embodiments of the invention will now be described by way of example and with reference to the accompanying drawings, in which:-
Fig. 1 is a front view partly broken away showing the structure and function of a first embodiment of the present invention;
Fig. 2 is a bottom view of the extrusion valve of Fig. 1, partly abbreviated;
Fig. 3 is a cross-sectional view, partly broken away, taken along line A-A of Fig. 1;
Fig. 4 is a cross-sectional view, taken along line B-B of Fig. 3;
Fig. 5 is an explanatory view, partly broken away, of the extrusion valve of the first embodiment showing its structure and function;
Fig. 6 is a partial cross-sectional front view showing the structure and function of a second embodiment of the invention; and
Fig. 7 is a partial cross-sectional front view of a prior art apparatus.

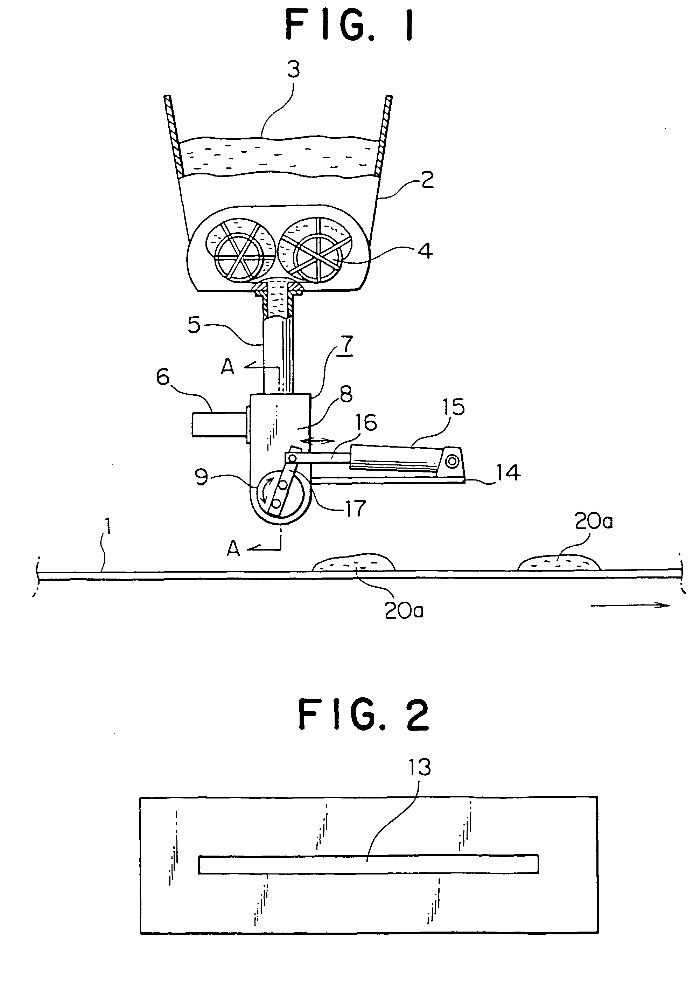

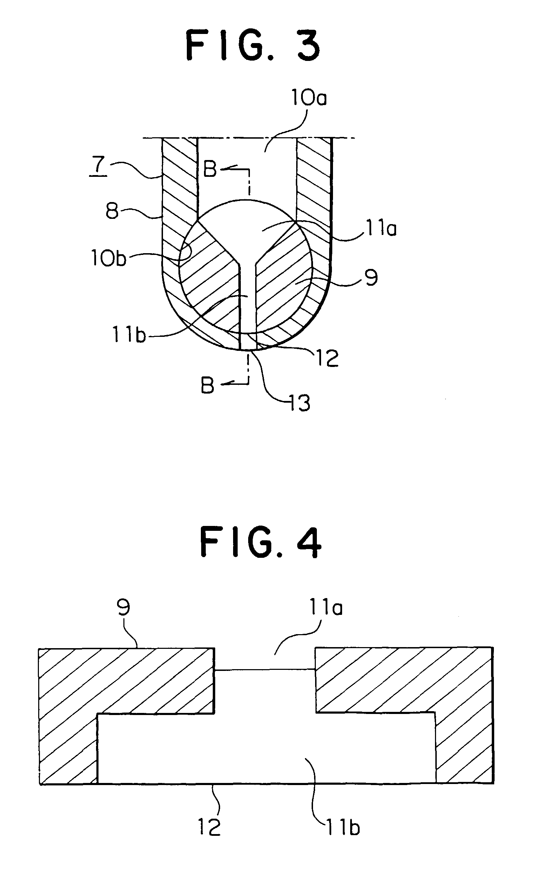

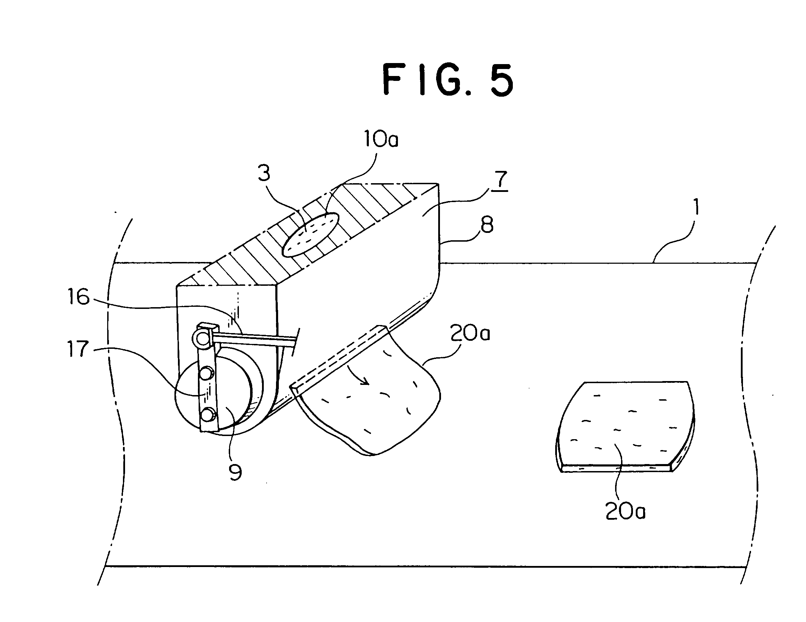

Referring to Figs. 1 to 5, a first embodiment of apparatus for intermittently extruding a predetermined quantity of food material will be described. Conveying means 1 can be a conveyor that moves at a preset speed or intermittently. A supply pump 4, which can be a volume-type vane pump, is provided in a hopper 2. The supply pump pushes the food material 3 downward to supply it. To the exit of the pump 4 is connected the upper end of a supply pipe 5.

The food material 3 may for example be viscoelastic biscuit dough, or the same mixed with chocolate chips or raisins.

A pressure sensor 6 is mounted in an inlet region 10a of a housing 8 of an extrusion valve 7, or at a position near the lower end of the supply pipe 5. The pressure sensor 6 senses the pressure, or changes in pressure, in the food material 3 in the pipe 5.

A semiconductor-type pressure sensor is preferably used for the pressure sensor 6, so that it can sense subtle pressure changes. The pressure sensor 6 adjusts the rotation of the supply pump 4 when the pressure decreases.

A fall in the pressure in the food material in the housing 8, or near to the exit of the pipe 5, can arise firstly, from a change in the amount of food material 3 in the supply pipe 5 when the material is extruded from the extrusion valve 7, and secondly, when the extrusion valve 7 is closed and the supply pump 4 is stopped, from the strongly viscoelastic characteristics of the food material 3 causing it to be pulled back into the hopper 2 through the supply pump 4.

For these reasons, when the pressure in the housing 8 or near to the exit of the supply pipe 5 becomes lower than a predetermined value, it is increased by rotating the supply pump 4 to feed the food material 3. When the pressure again reaches the preset value, the supply pump 4 is stopped. Thereby the pressure in the housing 8 or near the exit of the supply pipe 5 can be kept substantially constant.

The extrusion valve 7 has a housing inlet portion 10a, a rotor mounting portion 10b, and an elongate extrusion aperture 13. The upper end of the inlet portion 10a is connected to the lower end of the supply pipe 5. A rotor 9 is mounted in the rotor mounting portion 10b of the housing 8 so that the rotor can rotate reciprocatively. The rotor 9 is formed with an inlet 11a, an elongate channel 11b, and an elongate extrusion aperture 12. When the rotor 9 reciprocates in the rotor mounting portion 10b of the housing 8, the extrusion aperture 12 located at the end of the elongate channel 11b and the extrusion aperture 13 of the housing are intermittently brought into alignment with each other. The aperture 13 and the aperture 12 have the same lateral dimensions, and the inner diameter of the housing inlet 10a which receives the food material 3 from the supply pipe 5 is generally the same as that of the supply pipe.

An air cylinder 15 is pivotally supported on a base 14 fixed to the housing 8, and has its rod 16 pivotally connected to the end of an arm 17 connected to the rotor 9. Therefore, when the rod 16 of the air cylinder 15 reciprocates, the rotor 9 of the extrusion valve 7 is rotated. In Fig. 1 the reference number 20a indicates intermittently extruded dough pieces which are thereby deposited on the conveying means 1 from the extrusion aperture 13 of the extrusion valve 7.

By adjusting the reciprocating movement of the rod 16, the amount of rotation of the rotor 9 can be changed. Thereby the amount of overlap of the aperture 12 and the aperture 13 can be adjusted, and the thickness of the food material 3 when it is extruded from the extrusion valve 7 can thus be changed.

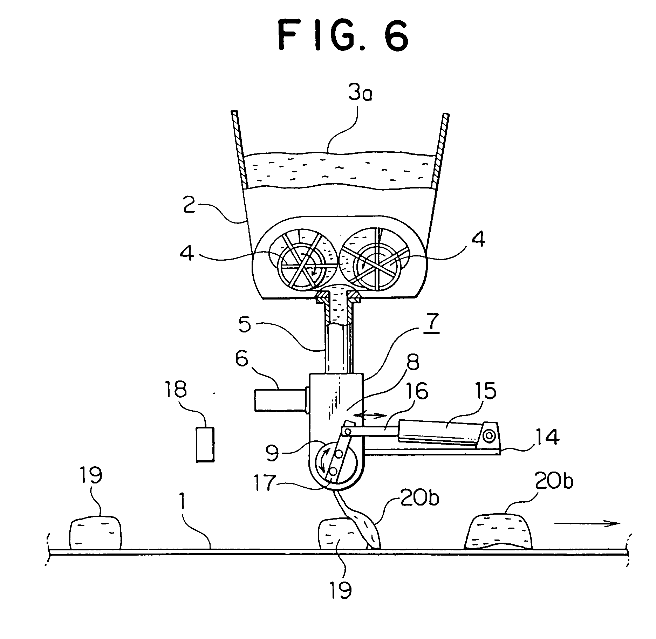

Referring now to the embodiment of Fig. 6, a position sensor 18, for example comprising a photoelectric sensor, is located upstream of the extrusion valve 7 and above the conveying means 1, which advances at a preset speed in the direction of the arrow. The extrusion valve 7, for extruding topping food material 3a, is located downstream of the position sensor 18 and above dough bodies 19 carried on the conveyor.

The topping material 3a may for example consist of biscuit dough pieces or the same mixed with chocolate chips or raisins, or jam, or kneaded sea urchins, etc.

The dough bodies 19 may for example comprise highly viscoelastic and fermentable bread dough, compressed fish cakes, or boiled fish paste. The bodies are intermittently deposited on the conveying means 1 and are conveyed successively by it with a certain distance between them.

The structure of the extrusion valve 7 in Fig. 6 is the same as in the first embodiment.

Based on the signals sensed by the position sensor 18, the rod 16 of the air cylinder 15 controls the reciprocal rotation of the rotor 9, through the arm 17.

Reference 20b designates the topping material extruded over the dough bodies 19 being conveyed.

The conveying conditions of the bodies 19 conveyed by the conveying means 1, at equal or unequal intervals, are sensed by the position sensor 18. Based on the information signal, a timer (not shown) calculates the timing of the opening and closing of the extrusion valve 7. Thus, each body 19 can synchronously receive extruded topping material 20b regardless of whether or not the bodies 19 are conveyed at equal or unequal intervals.

## Claims

1. An apparatus for intermittently extruding a predetermined quantity of a viscous food material comprising:
a hopper (2) for receiving the viscous food material, the hopper having a supply pump (4) therein at a lower discharging portion thereof;
a valve (7) having a housing (8) that has a discharging aperture (13) at a lower part thereof and a rotor (9), which is disposed in the housing (8), for opening and closing the discharging aperture (13) to allow the viscous food material to be intermittently discharged through the discharging aperture (13); and
a supply member (5) that connects the lower discharging portion of the hopper (2) with the housing (8) and feeds the viscous food material from the hopper (2) to the housing (8),
characterised in that a pressure sensor (6) is disposed to detect a pressure of the viscous food material at a place near the rotor (9) and along a passage for the food material that is defined between the hopper (2) and the rotor (9) by the supply member (5) and the housing (8).

2. The apparatus of claim 1, wherein the pressure sensor (6) is a semiconductor-type pressure sensor.

3. The apparatus of claim 1 or 2, further comprising a position sensing means (18), located above a conveying means (1), for detecting the positions of articles to be covered with the said food material which are transferred by the conveyor means (1).

4. A method for intermittently extruding a predetermined quantity of a viscous food material from a discharging aperture (13) of an intermittently-feeding valve (7) that has a rotor (9) for opening and closing the discharging aperture (13), comprising the steps of:
providing a viscous food material to a hopper (2) that has a supply pump (4) therein at a lower discharging portion thereof;
connecting the lower discharging portion of the hopper (2) with the intermittently-feeding valve (7), which is disposed under the hopper (2), by a supply member (5), thereby defining a passage for the viscous food material between the hopper (2) and the intermittently-feeding valve (7);
operating the supply pump (4), thereby supplying the food material from the hopper (2) to the intermittently-feeding valve (7) through the passage; and
operating the intermittently-feeding valve (7) such that the discharging aperture (13) of the valve (7) is opened and closed by the rotor (9), thereby allowing the food material to be intermittently extruded from the valve (7),
characterised in that the method further includes the step of detecting a pressure of the food material located near the rotor (9) to control the operating rate of the supply pump (4) based on the detected pressure to intermittently extrude the viscous food material under a predetermined pressure.

## Patentansprüche

1. Vorrichtung zum intermittierenden Extrudieren einer vorbestimmten Menge eines zähflüssigen Nahrungsmittelmaterials, aufweisend:
einen Trichter (2) zum Aufnehmen des zähflüssigen Nahrungsmittelmaterials, wobei der Trichter in sich eine Zuführpumpe (4) an einem unteren Abgabeabschnitt davon aufweist;
ein Ventil (7) mit einem Gehäuse (8), das eine Abgabeöffnung (13) an einem unteren Teil davon und einen Rotor (9) aufweist, welcher in dem Gehäuse (8) angeordnet ist, zum Öffnen und Schließen der Abgabeöffnung (13), um es zu ermöglichen, daß das zähflüssige Nahrungsmittelmaterial intermittierend durch die Abgabeöffnung (13) ausgeworfen werden kann; und
ein Zuführglied (5), welches den unteren Abgabeabschnitt des Trichters (2) mit dem Gehäuse (8) verbindet und das zähflüssige Nahrungsmittelmaterial von dem Trichter (2) zu dem Gehäuse (8) zuführt,
dadurch gekennzeichnet, daß ein Drucksensor (6) angeordnet ist, um einen Druck des zähflüssigen Nahrungsmittelmaterials an einem Ort nahe des Rotors (9) und entlang eines Durchgangs für das Nahrungsmittelmaterial, der zwischen dem Trichter (2) und dem Rotor (9) durch das Zuführglied (5) und das Gehäuse (8) definiert ist, zu erfassen.

2. Vorrichtung nach Anspruch 1, bei der der Drucksensor (6) ein Drucksensor vom Halbleitertyp ist.

3. Vorrichtung nach Anspruch 1 oder 2, des Weiteren aufweisend eine sich über einer Fördereinrichtung (1) befindliche Orts- oder Wegmeßeinrichtung (18) zum Erfassen der Positionen von mit dem Nahrungsmittelmaterial zu überziehenden Artikeln, welche durch die Fördereinrichtung (1) befördert werden.

4. Verfahren zum intermittierenden Extrudieren einer vorbestimmten Menge eines zähflüssigen Nahrungsmittelmaterials aus einer Abgabeöffnung (13) eines intermittierend zuführenden Ventils (7), das einen Rotor (9) zum Öffnen und Schließen der Abgabeöffnung (13) aufweist, aufweisend folgende Schritte:
Speisen eines Trichters (2), der eine Zuführpumpe (4) an einem unteren Abgabeabschnitt davon in sich trägt, mit einem zähflüssigen Nahrungsmittelmaterial;
Verbinden des unteren Abgabeabschnitts des Trichters (2) mit dem intermittierend zuführenden Ventil (7), welches unter dem Trichter (2) angeordnet ist, durch ein Zuführglied (5), wodurch ein Durchgang für das zähflüssige Nahrungsmittelmaterial zwischen dem Trichter (2) und dem intermittierend zuführenden Ventil (7) definiert wird;
Betreiben der Zuführpumpe (4), wodurch das Nahrungsmittelmaterial von dem Trichter (2) durch den Durchgang zu dem intermittierend zuführenden Ventil (7) zugeführt wird; und
Betreiben des intermittierend zuführenden Ventils (7) derart, daß die Abgabeöffnung (13) des Ventils (7) durch den Rotor (9) geöffnet und geschlossen wird, wodurch ermöglicht wird, daß das Nahrungsmittelmaterial intermittierend aus dem Ventil (7) extrudiert wird,
dadurch gekennzeichnet, daß das Verfahren des Weiteren den Schritt des Erfassens eines Drucks des sich nahe des Rotors (9) befindlichen Nahrungsmittelmaterials aufweist, um die Betriebsgeschwindigkeit der Zuführpumpe (4) basierend auf dem erfaßten Druck zu steuern, um intermittierend das zähflüssige Nahrungsmittelmaterial unter einem vorbestimmten Druck zu extrudieren.

## Revendications

1. Appareil pour extruder par intermittence une quantité prédéterminée d'un aliment visqueux comprenant :
une trémie (2) pour recevoir l'aliment visqueux, la trémie comportant une pompe d'alimentation (4) en son sein à une partie de décharge inférieure ;
une vanne (7) comportant un boîtier (8) qui comporte une ouverture de décharge (13) à une partie inférieure et un rotor (9), qui est disposé dans le boîtier (8), pour ouvrir et fermer l'ouverture de décharge (13) afin de permettre à l'aliment visqueux d'être déchargé par intermittence via l'ouverture de décharge (13) ; et
un organe d'alimentation (5) qui relie la partie de décharge inférieure de la trémie (2) avec le boîtier (8) et distribue l'aliment visqueux de la trémie (2) au boîtier (8),
caractérisé en ce qu'un capteur de pression (6) est disposé de manière à détecter une pression de l'aliment visqueux à un emplacement près du rotor (9) et le long d'un passage pour l'aliment qui est défini entre la trémie (2) et le rotor (9) par l'organe d'alimentation (5) et le boîtier (8).

2. Appareil selon la revendication 1, dans lequel le capteur de pression (6) est un capteur de pression du type à semi-conducteur.

3. Appareil selon la revendication 1 ou 2, comprenant également un moyen de détection de position (18), situé au-dessus d'un moyen de transport (1), pour détecter les positions d'articles devant être recouverts dudit aliment qui sont transférés par le moyen de transport (1).

4. Procédé pour extruder par intermittence une quantité prédéterminée d'un aliment visqueux depuis une ouverture de décharge (13) d'une vanne de distribution par intermittence (7) qui comporte un rotor (9) pour ouvrir et fermer l'ouverture de décharge (13), comprenant les étapes consistant à :
charger un aliment visqueux dans une trémie (2) qui comporte une pompe d'alimentation (4) en son sein à une partie de décharge inférieure ;
relier la partie de décharge inférieure de la trémie (2) avec la vanne de distribution par intermittence (7), qui est disposée sous la trémie (2), par un organe d'alimentation (5), de manière à définir un passage pour l'aliment visqueux entre la trémie (2) et la vanne de distribution par intermittence (7) ;
actionner la pompe d'alimentation (4) de manière à distribuer l'aliment de la trémie (2) à la vanne de distribution par intermittence (7) via le passage ; et
actionner la vanne de distribution par intermittence (7) de manière que l'ouverture de décharge (13) de la vanne (7) soit ouverte et fermée par le rotor (9), afin de permettre à l'aliment d'être extrudé par intermittence depuis la vanne (7),
caractérisé en ce que le procédé comprend également l'étape consistant à détecter une pression de l'aliment situé près du rotor (9) afin de contrôler la vitesse de fonctionnement de la pompe d'alimentation (4) sur la base de la pression détectée de manière à extruder par intermittence l'aliment visqueux sous une pression prédéterminée.
